# EUROPEAN PATENT APPLICATION

(11) **EP 4 064 275 A1**
(43) Date of publication of application: **28.09.2022**
(21) Application number: 21164202.0
(22) Date of filing: 23.03.2021
(51) Int. Cl.: G10K 15/02, B60L 15/20, B60Q 5/00, B60R 16/023

(54) **VEHICLE OUTPUT SIMULATION SYSTEM**

(71) Applicant: Chuang, Tge-Pin, 325 Taoyuan City (TW)
(72) Inventor: Chuang, Tge-Pin, 325 Taoyuan City (TW)
(74) Representative: 2K Patentanwälte Blasberg Kewitz & Reichel

(57) **Abstract**

A vehicle output simulation system is applied to an electric vehicle (100) including a motor (101) and a power supply (103). The vehicle output simulation system includes a storage module (10), a control panel (20), a motor control module (30), a speaker device (40), and a host computer (50). The storage module (10) stores a simulation setting (11) including an acceleration curve characteristic datum (111) and a sound effect (112). The control panel (20) selects operations, and outputs a control command (21). The motor control module (30) controls the motor (101) and the power supply (103) according to the acceleration curve characteristic datum (111). The speaker device (40) outputs the sound effect (112) corresponding to the control command (21).

## Description

### BACKGROUND

### Technical Field

The present disclosure relates to a vehicle output simulation system, and more particularly to a vehicle output simulation system that makes an electric vehicle to operate an acceleration curve characteristic datum and a sound effect according to a simulation setting selected by a user.

### Description of Related Art

The statements in this section merely provide background information related to the present disclosure and do not necessarily constitute prior art.

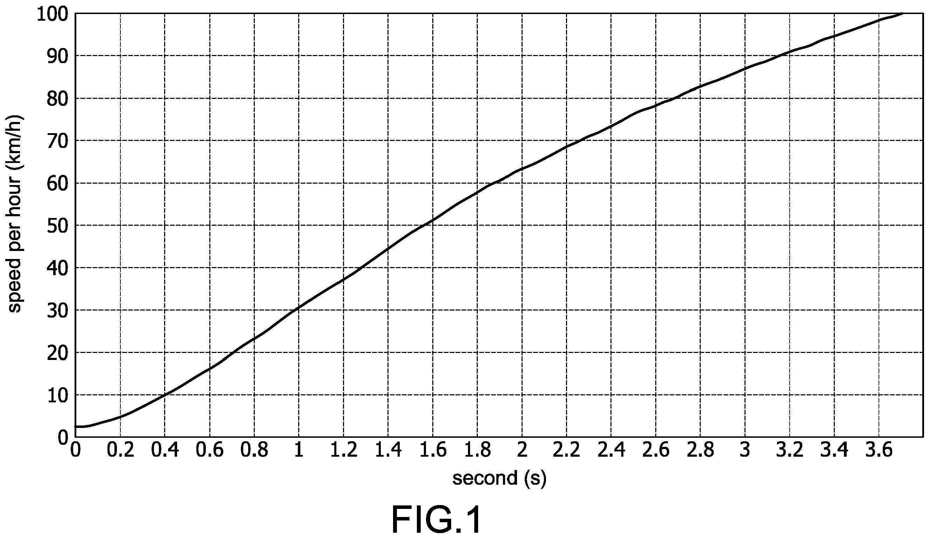

As environmental protection issues continue to be popular, and various renewable energy technologies mature, transportation vehicles are gradually developing towards low environmental pollution. For example, electric vehicles have gradually become a mainstream of transportation in the future. The electric vehicles have advantages of high torque, fast acceleration, low noise, and no air pollution, etc., and the electric vehicles may be used to replace current private cars, buses, motorcycles, or engineering vehicles, etc. Especially, with continuous development of electric vehicles, the current performance of electric vehicles is getting better and better, some high-priced electric vehicles take less than 5 seconds to accelerate from a static state at the start to a speed of 100 km/h. Such acceleration performance of the aforementioned electric vehicles is not inferior to most supercars currently on the market that are mainly gas engines, and they have very superior performance for drivers. As shown in FIG. 1, it is an acceleration curve of an electric vehicle in the prior art.

However, the dynamic characteristics and acceleration performance of the electric vehicle in the prior art have been adjusted before leaving factory according to hardware, appearance, and price of the electric vehicle, and it is no longer be adjusted according to personal needs or special circumstances. Further, since general electric vehicles do not use internal combustion engine transmission, there is almost no noise except for the operation of the transmission mechanism. For drivers, because of the lack of the rumbling and bloody engine noise during acceleration, there is less driving pleasure during driving, and more dangerous for pedestrians who are less sensitive to hearing.

Therefore, how to design a vehicle output simulation system, and more particularly to solve the aforementioned technical problems of there is less driving pleasure during driving, and more dangerous for pedestrians who are less sensitive to hearing in the prior art, was studied by inventor of the present disclosure.

### SUMMARY

A purpose of the present disclosure is to provide a vehicle output simulation system that may solve the aforementioned technical problems of there is less driving pleasure during driving, and more dangerous for pedestrians who are less sensitive to hearing in the prior art, so as to achieve the purpose of making electric vehicles both safety and driving pleasure.

In order to achieve the purpose, the vehicle output simulation system is applied to an electric vehicle includes a motor, and a power supply, the vehicle output simulation system includes a storage module, a control panel, a motor control module, a speaker device, and a host computer. The storage module stores at least one simulation setting, each simulation setting includes an acceleration curve characteristic datum, and a sound effect. The control panel is coupled to the storage module, the control panel is used to select any one of the at least one simulation setting, and outputs a control command. The motor control module controls at least one of the motor, and the power supply according to the acceleration curve characteristic datum corresponding to the control command. The speaker device outputs the sound effect corresponding to the control command. The host computer is coupled to the storage module, the control panel, the motor control module, and the speaker device, the host computer receives the control command for controlling the motor control module, and the speaker device.

Further, the vehicle output simulation system further includes an acceleration control unit, and the acceleration control unit is coupled to the host computer for outputting a driving command. The motor control module controls at least one of the motor, and the power supply according to the driving command, and the acceleration curve characteristic datum corresponding to the control command.

Further, in the vehicle output simulation system, the host computer controls the motor control module, and the speaker device simultaneously according to the acceleration curve characteristic datum, and the sound effect that are matched. When the acceleration curve characteristic datum represents high rotation speed or high torque, the host computer controls the speaker device to generate the sound effect with large volume. When the acceleration curve characteristic datum represents low rotation speed or low torque, the host computer controls the speaker device to generate the sound effect with small volume. Each simulation setting further includes a resistance setting, and the host computer sets a resistance of the acceleration control unit according to the resistance setting corresponding to the control command.

Further, in the vehicle output simulation system, the storage module further stores an automatic driving setting, a performance mode setting, an energy saving mode setting, and a default mode setting. The control panel is used to select any one of the automatic driving setting, the performance mode setting, the energy saving mode setting, the default mode setting, and the at least one simulation setting, and the control panel outputs the control command.

Further, in the vehicle output simulation system, the control panel is used to select a factory setting menu, and a supercar simulation menu. The factory setting menu selects at least one of the automatic driving setting, the performance mode setting, the energy saving mode setting, and the default mode setting. The supercar simulation menu includes the at least one simulation setting.

Further, in the vehicle output simulation system, the motor control module includes a speed controller, a transmission gear controller, and a power controller. The speed controller is coupled to the host computer, and the motor, and the speed controller controls a rotation speed of the motor. The transmission gear controller is coupled to the host computer, and the transmission gear controller controls a gear position of the electric vehicle. The power controller is coupled to the host computer, and the power supply, and the power controller controls the power supply.

Further, the electric vehicle further includes a gearbox. The motor control module controls at least one of the motor, the gearbox, and the power supply according to the acceleration curve characteristic datum corresponding to the control command.

Further, the acceleration curve characteristic datum includes a rotation speed used to simulate an output of a supercar.

Further, the acceleration curve characteristic datum includes a torque used to simulate an output of a supercar.

Further, the acceleration curve characteristic datum includes a horsepower used to simulate an output of a supercar.

When using the vehicle output simulation system of the present disclosure, the at least one simulation setting may be pre-stored in the storage module. For example, the at least one simulation setting relates to multiple simulation settings of a variety of supercars. The user may operate the control panel coupled to the storage module, and the user may select any one of the simulation settings stored in the storage module, so that the control panel outputs the control command related to the simulation setting selected. Afterward, the host computer receives the control command to control the motor control module, and the speaker device. The motor control module controls the motor, and power supply according to the acceleration curve characteristic datum of the corresponding control command, and the speaker device outputs the sound effect corresponding to the control command may provide the driver with more driving pleasure and may provide enough function to warn for pedestrians. Further, each simulation setting may further include the resistance setting, and the host computer sets a resistance of the acceleration control unit according to the resistance setting corresponding to the control command, so that the user has a driving experience of a specific supercar. Moreover, the motor control module may further distinguish a plurality of details, the details may control the speed of the motor, or to control the transmission gear (or gear ratio) of the electric vehicle.

For this reason, the vehicle output simulation system that may solve the technical problems about there is less driving pleasure during driving, and more dangerous for pedestrians who are less sensitive to hearing in the prior art, so as to achieve the purpose of making the electric vehicle both safety and driving pleasure.

In order to further understand the techniques, means, and effects of the present disclosure for achieving the intended purpose. Please refer to the following detailed description and drawings of the present disclosure. The drawings are provided for reference and description only, and are not intended to limit the present disclosure.

### BRIEF DESCRIPTION OF DRAWINGS

FIG. 1 is an acceleration curve of an electric vehicle in prior art.
FIG. 2 is an architecture diagram of a vehicle output simulation system of a first embodiment of the present disclosure.
FIG. 3 is an architecture diagram of the vehicle output simulation system of a second embodiment of the present disclosure.
FIG. 4 is an architecture diagram of the vehicle output simulation system of a third embodiment of the present disclosure.
FIG. 5 is the architecture diagram of the vehicle output simulation system of a fourth embodiment of the present disclosure.
FIG. 6 is a relationship diagram between a storage module and a control panel of the vehicle output simulation system of the present disclosure.
FIG. 7 is a relationship diagram of the speed, torque, and horsepower of the vehicle output simulation system of the present disclosure.

### DETAILED DESCRIPTION

The technical content and detailed description of the present disclosure will be described below in conjunction with the drawings.

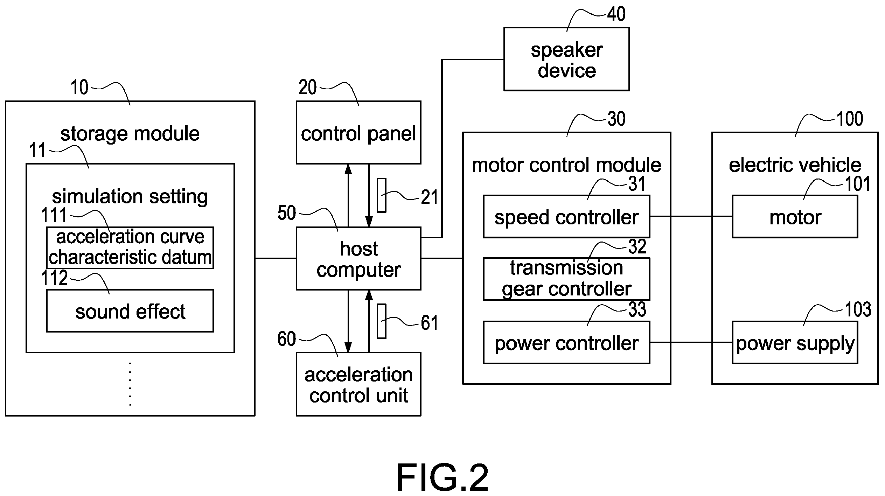

Please refer to FIG. 2, which is an architecture diagram of a vehicle output simulation system of a first embodiment of the present disclosure. Regarding the first embodiment of the present disclosure, the vehicle output simulation system may be applied to an electric vehicle 100, and the electric vehicle 100 includes a motor 101 and a power supply 103. The vehicle output simulation system may include a storage module 10, a control panel 20, a motor control module 30, a speaker device 40, and a host computer 50.

The storage module 10 stores at least one simulation setting 11, and each of the at least one simulation setting 11 may include an acceleration curve characteristic datum 111 and a sound effect 112. In the first embodiment of the present disclosure, the storage module 10 may be a non-volatile data storage medium such as EEPROM, NAND Flash, etc. Further, the simulation setting 11 may include corresponding vehicle output power characteristic datum about such as Aston Martin, BMW, Ferrari, Lamborghini, Maserati, Porsche, etc. Further, the simulation setting 11 may be recorded in advance for engine sounds corresponding to various supercars, so when switching between different simulation setting 11, the electric vehicle 100 may generate different engine sounds. In addition, the acceleration curve characteristic datum 111 may be set based on a curve datum of a rotation speed of a supercar, a curve datum of a torque of the supercar, or a curve datum of a horsepower of the supercar. In the embodiment of the present disclosure, a host computer 50 from factory is mainly set to change or increase data to the acceleration curve characteristic datum 111 in the host computer 50 original. However, the present disclosure is not limited thereof.

The control panel 20 is coupled to the storage module 10, the control panel 20 is used to select any one of the at least one simulation setting 11, and the control panel 20 outputs a control command 21. In the first embodiment of the present disclosure, the control panel 20 may be a liquid crystal display (LCD), light emitting diode (LED), organic light emitting diode (OLED), quantum dot organic light emitting diode (QD-OLED), sub-millimeter light emitting diode (mini-LED), micro light emitting diode (micro-LED), indium gallium zinc oxide (IGZO), or e-Paper. However, the present disclosure is not limited thereof.

The motor control module 30 controls the at least one of the motor 101 and the power supply 103 according to the acceleration curve characteristic datum 111 corresponding to the control command 21. In the first embodiment of the present disclosure, the motor control module 30 may include a speed controller 31, a transmission gear controller 32, and a power controller 33. The speed controller 31 is coupled to the host computer 50 and the motor 101, and the speed controller 31 may control the rotation speed of the motor 101. The transmission gear controller 32 is coupled to the host computer 50, and the transmission gear controller 32 may control a gear position of the electric vehicle 100, such as the gear ratio so as to regulate the torque and the horsepower about outputs of a vehicle. The power controller 33 is coupled to the host computer 50 and the power source 103, and the power controller 33 may control the power supply 103. The power controller 33 may be a battery management system (BMS), and its circuit architecture may include any one of a microcontroller (MCU), a microprocessor (MPU), a central processing unit (CPU), an application specific integrated circuit (ASIC), and system on a chip (SoC). However, the present disclosure is not limited thereof.

The speaker device 40 outputs the sound effect 112 corresponding to the control command 21. In the first embodiment of the present disclosure, the speaker device 40 may include at least one or any combination of wearable speaker devices, in-car speakers, and out-car speakers; a personal mode, an in-car mode, or out-car mode may be switched through the control panel 20. The wearable speaker devices may include in-ear earphones, over-ear earphones, air conduction hearing earphones, bone conduction hearing earphones, or middle ear implants. The in-car speakers or the out-car speakers may include electrodynamic speakers, electromagnetic speakers, piezoelectric speakers, electrode speakers, or plasma arc speakers. However, the present disclosure is not limited thereof.

The host computer 50 is coupled to the storage module 10, the control panel 20, the motor control module 30, and the speaker device 40. The host computer 50 receives the control command 21 for controlling the motor control module 30 and the speaker device 40. In the first embodiment of the present disclosure, the host computer 50 may be a circuit board running X86 or ARM, and based on an architecture of Arduino machine code, or may be a processing core of a Raspberry Pi. The model of the Raspberry Pi may be at least one of type 1A, type 1A+, type 1B, type 1B+, type 2B, type 3B, type 3A+, type 3B+, and type 4B. However, the present disclosure is not limited thereof.

The host computer 50 simultaneously controls the motor control module 30 and the speaker device 40 according to the acceleration curve characteristic datum 111 and the sound effect 112 that are matched. When the acceleration curve characteristic datum 111 represents high rotation speed or high torque, the host computer 50 controls the speaker device 40 to generate the sound effect 112 with large volume. When the acceleration curve characteristic datum 111 represents low rotation speed or low torque, the host computer 50 controls the speaker device 40 to generate the sound effect 112 with small volume.

Further, the vehicle output simulation system may further include an acceleration control unit 60. The acceleration control unit 60 is coupled to the host computer 50 for outputting a driving command 61. The motor control module 30 controls at least one of the motor 101 and the power supply 103 according to the driving command 61 and the acceleration curve characteristic datum 111 corresponding to the control command 21. In the first embodiment of the present disclosure, the acceleration control unit 60 may be in form of a control lever, a pressing structure, or a foot pedal (for example, an accelerator pedal, or a clutch pedal of a vehicle with a gas engine). The user may control output rotation speed of the motor 101 or a gear position of the electric vehicle 100 by adjusting the acceleration control unit 60. However, the present disclosure is not limited thereof.

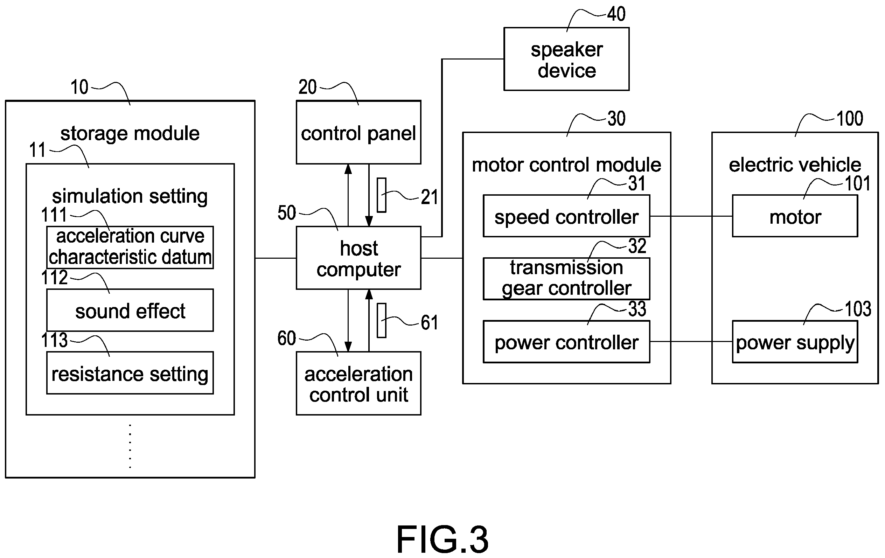

Please refer to FIG. 3, which is the architecture diagram of the vehicle output simulation system of a second embodiment of the present disclosure. Regarding the second embodiment of the present disclosure, the vehicle output simulation system is substantially the same as the first embodiment aforementioned, except that each simulation setting 11 further includes a resistance setting 113. The host computer 50 sets a resistance of the acceleration control unit 60 according to the resistance setting 113 corresponding to the control command 21, which may further increase a driving pleasure of the user when adjusting the acceleration control unit 60.

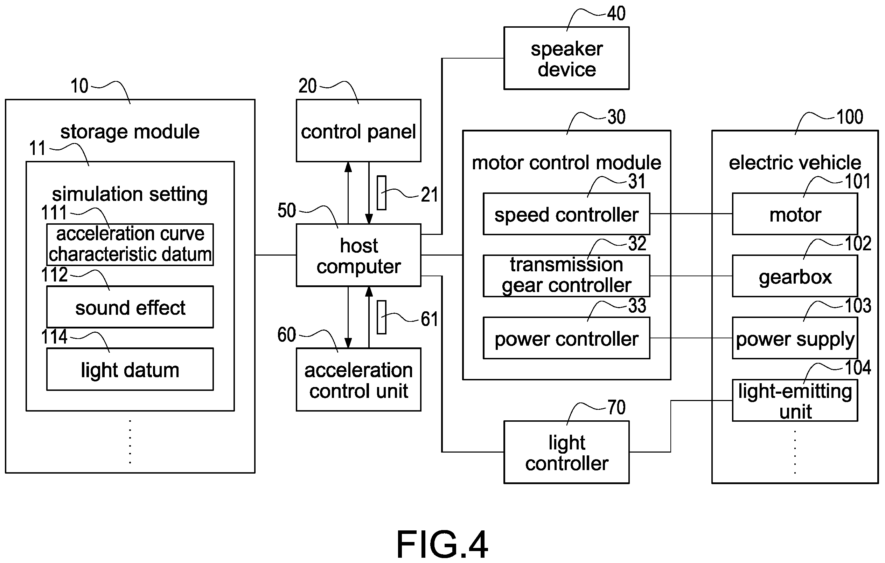

Please refer to FIG. 4, which is the architecture diagram of the vehicle output simulation system of a third embodiment of the present disclosure. Regarding the third embodiment of the present disclosure, the vehicle output simulation system is substantially the same as the first embodiment aforementioned, except that the electric vehicle 100 includes a gearbox 102, and the vehicle output simulation system may further include a light controller 70 and light-emitting units 104. Each simulation setting 11 may further include a light datum 114. A plurality of light-emitting units 104 may be configured in the electric vehicle 100, and the light controller 70 is coupled to the host computer 50 so that the host computer 50 may control the plurality of light-emitting units 104. The light-emitting units 104 are coupled to the light controller 70, and perform illumination or light variation according to the light datum 114 corresponding to the control command 21.

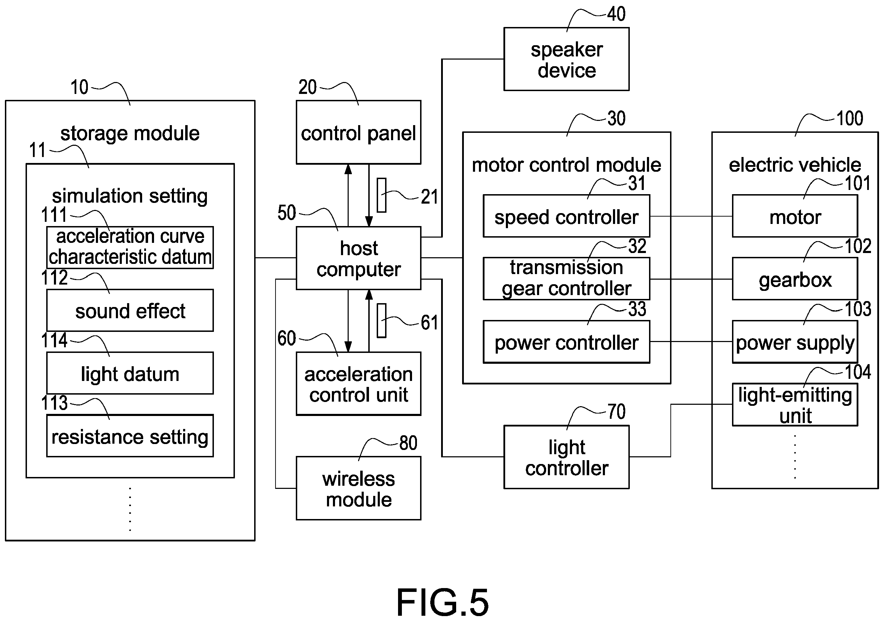

Please refer to FIG. 5, which is the architecture diagram of the vehicle output simulation system of a fourth embodiment of the present disclosure. Regarding the fourth embodiment of the present disclosure, the vehicle output simulation system is substantially the same as the third embodiment aforementioned, except that the vehicle output simulation system may further include a wireless module 80, and each simulation setting 11 further includes the resistance setting 113. The wireless module 80 is coupled to the host computer 50, and the wireless module 80 is used to update at least one simulation setting 11 in the storage module 10 through a wireless transmission protocol to provide commercial services such as over-the-air technology (OTA technology) service, etc. Further, the wireless transmission protocol includes at least one of Wi-Fi, Zigbee, LoRa (Long Range), Bluetooth, and NFC. However, the present disclosure is not limited thereof.

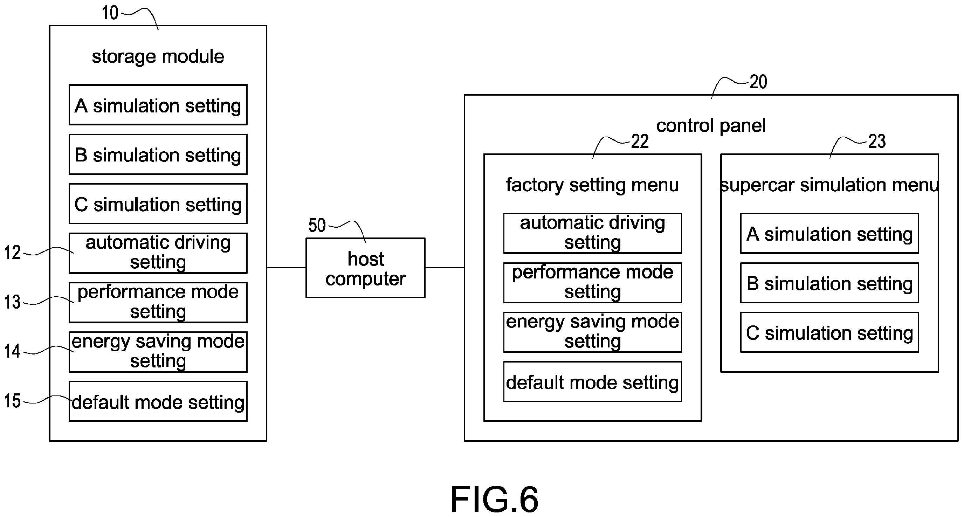

FIG. 6 is a relationship diagram between the storage module 10 and the control panel 20 of the vehicle output simulation system of the present disclosure. In addition to storing simulation setting A, simulation setting B, and simulation setting C belonging to at least one simulation setting 11, the storage module 10 may also store automatic driving setting 12, performance mode setting 13, energy saving mode setting 14, and default mode setting 15. Further, the control panel 20 may be used for the user to select a factory setting menu 22 and a supercar simulation menu 23. The factory setting menu 22 may include multiple selection blocks displayed as the automatic driving setting 12, the performance mode setting 13, the energy saving mode setting 14, and the default mode setting 15. The supercar simulation menu 23 may include multiple selection blocks shown as the simulation setting A, the simulation setting B, and the simulation setting C. For example, when the user presses the selection block named automatic driving setting 12, the host computer 50 will retrieve the automatic driving setting 12 in the storage module 10, and so on.

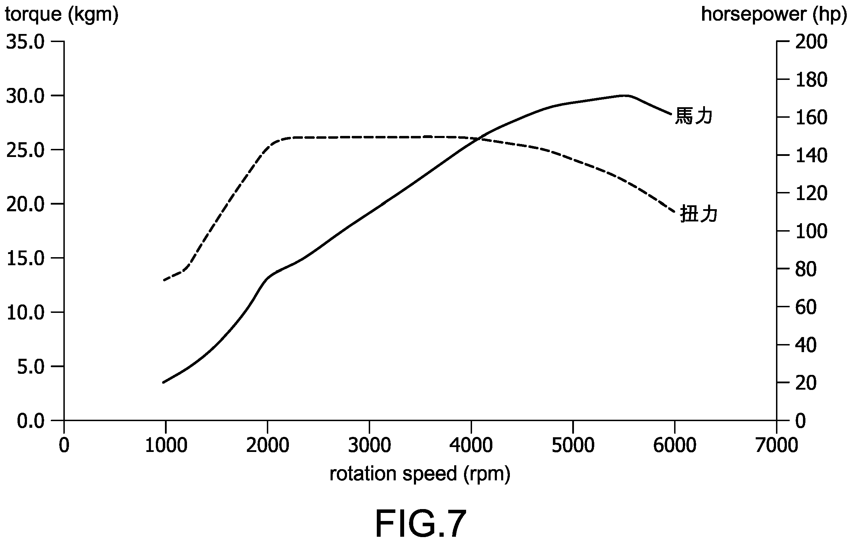

Please refer to FIG. 7, which is a relationship diagram of the speed, torque, and horsepower of the vehicle output simulation system of the present disclosure. The acceleration curve characteristic datum 111 of the vehicle output simulation system of the present disclosure mainly simulates the speed or torque output of a supercar. For example, when a supercar is outputting high horsepower, the output speed of the supercar will instantly increase. At this time, the electric vehicle 100 also increases the output current to increase the speed to similar to the supercar. The vehicle output simulation system of the present disclosure may output current according to motor characteristics of the electric vehicle 100 to control rotation speed of the motor 101. The sound of supercar is mainly produced at high speeds, which will produce strong sound waves. Relatively, the electric vehicle 100 will also control the sound according to the rotation speed when the electric vehicle 100 to simulates a supercar. The curve in FIG. 7 may satisfy the relationship of power (kW)=torque (N-m) × rotation speed (rpm)/9549, and 1 horsepower (hp)=746W.

When the vehicle output simulation system of the present disclosure is used, the at least one simulation setting 11 may be pre-stored in the storage module 10. For example, the at least one simulation setting 11 relates to multiple simulation settings 11 of a variety of supercars. The user may operate the control panel 20 coupled to the storage module 10, and the user may select any one of the simulation settings 11 stored in the storage module 10, so that the control panel 20 outputs the control command 21 related to the simulation setting 11 selected. Afterward, the host computer 50 receives the control command 21 to control the motor control module 30 and the speaker device 40. The motor control module 30 controls the motor 101, the gearbox 102, and the power supply 103 according to the acceleration curve characteristic datum 111 of the corresponding control command 21. The speaker device 40 outputs the sound effect 112 corresponding to the control command 21 so that the driver with more driving pleasure and enough function to warn for pedestrians are implemented.

Further, each simulation setting 11 may further include the resistance setting 113, and the host computer 50 sets the resistance of the acceleration control unit 60 according to the resistance setting 113 corresponding to the control command 21, so that the user has a driving experience of a specific supercar. Moreover, the motor control module 30 may further distinguish a plurality of details, such as the speed controller 31 controls the speed of the motor 101, and the transmission gear controller 32 controls the gear (or gear ratio) of the electric vehicle 100.

For this reason, the vehicle output simulation system that may solve the technical problems about there is less driving pleasure during driving, and more dangerous for pedestrians who are less sensitive to hearing in the prior art, so as to achieve the purpose of making the electric vehicle 100 both safety and driving pleasure.

The above is only a detailed description and drawings of the preferred embodiments of the present disclosure, but the features of the present disclosure are not limited thereto, and are not intended to limit the present disclosure. All the scope of the present disclosure shall be subject to the scope of the following claims. The embodiments of the spirit of the present disclosure and its similar variations are intended to be included in the scope of the present disclosure. Any variation or modification that may be easily conceived by those skilled in the art in the field of the present disclosure may be covered by the following claims.

## Claims

1. A vehicle output simulation system applied to an electric vehicle (100) comprising a motor (101) and a power supply (103), **characterized in that** the vehicle output simulation system comprising:
a storage module (10) configured to store at least one simulation setting (11), each simulation setting (11) comprising an acceleration curve characteristic datum (111) and a sound effect (112),
a control panel (20) coupled to the storage module (10), the control panel (20) configured to select any one of the at least one simulation setting (11), and to output a control command (21),
a motor control module (30) configured to control at least one of the motor (101) and the power supply (103) according to the acceleration curve characteristic datum (111) corresponding to the control command (21),
a speaker device (40) configured to output the sound effect (112) corresponding to the control command (21), and
a host computer (50) coupled to the storage module (10), the control panel (20), the motor control module (30), and the speaker device (40), the host computer (50) configured to receive the control command (21) for controlling the motor control module (30) and the speaker device (40).

2. The vehicle output simulation system as claimed in claim 1, **characterized in that** the vehicle output simulation system further comprising:
an acceleration control unit (60) coupled to the host computer (50) for outputting a driving command (61),
wherein the motor control module (30) is configured to control at least one of the motor (101) and the power supply (103) according to the driving command (61) and the acceleration curve characteristic datum (111) corresponding to the control command (21).

3. The vehicle output simulation system as claimed in claim 2, **characterized in that** the host computer (50) is configured to simultaneously control the motor control module (30) and the speaker device (40) according to the acceleration curve characteristic datum (111) and the sound effect (112) that are matched,
when the acceleration curve characteristic datum (111) represents high rotation speed or high torque, the host computer (50) is configured to control the speaker device (40) to generate the sound effect (112) with large volume, when the acceleration curve characteristic datum (111) represents low rotation speed or low torque, the host computer (50) is configured to control the speaker device (40) to generate the sound effect (112) with small volume,
each simulation setting (11) further comprises a resistance setting (113), and the host computer (50) is configured to set a resistance of the acceleration control unit (60) according to the resistance setting (113) corresponding to the control command (21).

4. The vehicle output simulation system as claimed in claim 1, **characterized in that** the storage module (10) is configured to further store an automatic driving setting (12), a performance mode setting (13), an energy saving mode setting (14), and a default mode setting (15),
wherein the control panel (20) is configured to select any one of the automatic driving setting (12), the performance mode setting (13), the energy saving mode setting (14), the default mode setting (15), and the at least one simulation setting (11), and the control panel (20) is configured to output the control command (21).

5. The vehicle output simulation system as claimed in claim 4, **characterized in that** the control panel (20) is configured to select a factory setting menu (22) and a supercar simulation menu (23),
wherein the factory setting menu (22) is configured to select at least one of the automatic driving setting (12), the performance mode setting (13), the energy saving mode setting (14), and the default mode setting (15), and the supercar simulation menu (23) comprises the at least one simulation setting (11).

6. The vehicle output simulation system as claimed in claim 1, **characterized in that** the motor control module (30) comprises:
a speed controller (31) coupled to the host computer (50) and the motor (101), and the speed controller (31) configured to control a rotation speed of the motor (101),
a transmission gear controller (32) coupled to the host computer (50), and the transmission gear controller (32) configured to control a gear position of the electric vehicle (100), and
a power controller (33) coupled to the host computer (50) and the power supply (103), and the power controller (33) configured to control the power supply (103).

7. The vehicle output simulation system as claimed in claim 1, **characterized in that** the electric vehicle (100) further comprises a gearbox (102),
wherein the motor control module (30) is configured to control at least one of the motor (101), the gearbox (102), and the power supply (103) according to the acceleration curve characteristic datum (111) corresponding to the control command (21).

8. The vehicle output simulation system as claimed in claim 1, **characterized in that** the acceleration curve characteristic datum (111) comprises a rotation speed,
wherein the rotation speed is configured to simulate an output of a supercar.

9. The vehicle output simulation system as claimed in claim 1, **characterized in that** the acceleration curve characteristic datum (111) comprises a torque,
wherein the torque is configured to simulate an output of a supercar.

10. The vehicle output simulation system as claimed in claim 1, **characterized in that** the acceleration curve characteristic datum (111) comprises a horsepower,
wherein the horsepower is configured to simulate an output of a supercar.
